# EUROPEAN PATENT APPLICATION

(11) **EP 3 648 408 A1**
(43) Date of publication of application: **06.05.2020**
(21) Application number: 18203750.7
(22) Date of filing: 31.10.2018
(51) Int. Cl.: H04L 12/26, H04L 12/24

(54) **MONITORING SYSTEM PERFORMANCE**

(71) Applicant: Atos Nederland B.V., 1185 MC Amstelveen (NL)
(72) Inventor: Hensbergen, Mark, 5251WV Vlijmen (NL)
(74) Representative: Patentanwaltskanzlei WILHELM & BECK

(57) **Abstract**

The invention relates to a system. The system comprises at least one object, a data collection agent configured to collect operation data of the at least one object, the operation data relating to at least one system resource of the system, and a data processing module. The data processing module is configured to process collected operation data such that condensed operation data of the at least one object is provided. The processing performed by the data processing module comprises carrying out at least a statistical processing method and/or an analytical processing method. The invention furthermore relates to a system network, to a data processing module for a system and to a data processing method.

## Description

The present invention relates to a system. The system comprises a data collection agent for collecting operation data of at least one object. The invention furthermore relates to a system network comprising a plurality of such systems and a central monitoring system, to a data processing module for a system in which operation data of at least one object is collected, and to a data processing method.

In the ICT (information and communications technology) industry, there are many solutions for monitoring systems such as servers or networking devices. These solutions may be grouped into two clusters. On the one hand, there are solutions focused on the availability of systems or services running on those systems, triggering alarms in case of warning or error situations. On the other hand, there are solutions focused on monitoring and managing the performance of systems, e.g. by collecting performance or capacity metrics and analyzing these.

With regard to the latter, implementation details may vary across device types, operating systems and vendors. Common denominator is that an agent which may be included in a monitored system of interest measures the relevant aspect of the system or of other objects of interest with some time interval, and then sends the collected operation data to a central monitoring system for aggregation of data across multiple objects, over a longer time series, for further analysis. In this way, all relevant data may be centrally available for analysis by the central monitoring system and its users.

The existing approach has several shortcomings. For a given sample frequency, the total amount of data to be transferred to the central monitoring system is the number of monitored systems multiplied by the amount of data per sample. For the measurements and frequencies that engineers would like to have, this would create significant data traffic and network load that is not acceptable in larger scale operational environments. Engineers are then forced to make a trade-off and reduce sample frequencies and/or reduce a set of measurement points. With regard to logging, the files containing the raw measurements may be very big and may consume significant disk I/O (input/output) and disk space. Moreover, analysis of such big files may be challenging. In practice, engineers then only enable this for a short time interval missing out on useful information. When sampling frequency or number of measurement points are reduced, the information at the central monitoring system, or even locally, may be just good enough to determine average resource utilization, but may miss out on any performance anomalies causing performance or responsiveness issues as perceived by end users of the systems of interest.

The object of the invention is to provide an improved solution for monitoring a system performance.

This object is achieved by means of the features of the independent patent claims. Further advantageous embodiments of the invention are specified in the dependent claims.

According to one aspect of the invention, a system is proposed. The system comprises at least one object, a data collection agent configured to collect operation data of the at least one object, the operation data relating to at least one system resource of the system, and a data processing module. The data processing module is configured to process collected operation data such that condensed operation data of the at least one object is provided. The processing performed by the data processing module comprises carrying out at least a statistical processing method and/or an analytical processing method.

The basic idea behind the invention is applying the paradigm "data is not information". In this regard, the proposed system comprises, in addition to at least one object and a data collection agent for collecting operation data of the at least one object during operation of the same, a data processing module. The data processing module is configured to process collected operation data by carrying out at least a statistical processing method and/or an analytical processing method, thereby providing condensed operation data of the at least one object relating to at least one system resource of the system.

The operation data under consideration relates to at least one system resource of the system. Such a system resource may be any component, e.g. any physical or virtual component, of limited availability within the system.

The proposed system makes it possible to reduce large amounts of raw operation data, which may be provided by the data collection agent e.g. with a high sample frequency, to a smaller set of information. In other words, by means of the data processing module, a large raw data set of measurements (e.g. per second) may be replaced with a small result set (e.g. per hour) of condensed operation data. The condensed operation data may have the same or substantially the same information value about the at least one object as the large raw operation data. The data reduction achieved in this way may be e.g. a factor 1000 or in the range of a factor 1000.

In this way, the proposed system may feature a plurality of advantages. The condensed operation data may be forwarded or communicated to another system, e.g. a central monitoring system, more effectively. In this regard, it is e.g. possible to effectively reduce data traffic and network load, thus making possible a saving of costs. Moreover, in comparison to a conventional approach in which raw operation data is transferred, it is also possible to include much more information in the same amount of data transferred.

The possible data reduction allows for a much better-quality performance monitoring and management for any given bandwidth limit, thus enabling easier discovery of the root cause for any performance related incident. This may apply to a single system or single application administrator as well as to a network administrator or manager. In this respect, based on the condensed operation data provided by the data processing module, it is e.g. possible to effectively and reliably determine any system bottlenecks such as at least one object of the system which may excessively utilize or consume a system resource of the system. Based on this, appropriate measures or countermeasures may be initiated in order to eliminate any negative effects arising from this. In this regard, it is e.g. possible to carry out an intensified analysis of a determined object, or to perform stopping and restarting the operation of a determined object.

Further possible embodiments and details of the system are described more specifically in the following.

In one embodiment, the system is a computer system. The computer system may comprise devices and elements such as a processing device, e.g. a CPU (central processing unit), a memory device, an input device, an output device, an I/O (input/output) device etc. The aforementioned devices may be also present several times. The at least one object of which operation data is collected may be a service or application running on the computer system.

With regard to the above-mentioned embodiment, the at least one system resource may be e.g. a CPU usage, a memory usage, a number of I/O connections, a number of internet connections etc.

The data collection agent may also be an application running on the system or computer system.

This may also apply to the data processing module. In this regard, the data processing module may be e.g. integrated in the data collection agent. Alternatively, the data processing module may be a separate component or application which may be assigned or directly assigned to the data collection agent. In this regard, operation data collected by the data collection agent may be transferred to the data processing module within the system and not via other external components such as e.g. a central monitoring system.

It is furthermore possible, that the at least one object of the system of which operation data is collected is a physical device. Examples are an actuator, a thermostat, a memory device etc.

In case that a plurality of objects of the system is considered and operation data of the plurality of objects is collected, the plurality of objects may comprise identical or different objects. With regard to the latter, the objects may e.g. comprise one or several applications or services and/or one or several physical devices.

In a further embodiment, the data processing module is configured in such a way that condensed operation data is in each case provided after expiration of a predefined time interval. The predefined time interval may be e.g. in the minute range, i.e. in the single- or multi-digit minute range. In this regard, as indicated above, the time interval may be e.g. an hour such that condensed operation data may be provided by the data processing module every hour. Apart from this, a larger time interval may be considered with regard to the provision of the condensed operation data by means of the data processing module. Examples are a plurality of hours, one day or a plurality of days.

Data collection by means of the data collection agent and thus providing the collected raw data to the data processing module may in each case also be carried out after expiration of a predefined time interval. This time interval may be shorter or significantly shorter than the above-mentioned time interval, and may be e.g. a second such that operation data may be collected by the data collection agent every second.

In summary, the data collection agent may be configured to provide collected operation data in each case after expiration of a first predefined time interval, and the data processing module may be configured to provide condensed operation data in each case after expiration of a second predefined time interval. The second predefined time interval may exceed or, respectively, may significantly exceed the first predefined time interval. In this regard, the second predefined time interval may be a factor larger than the first predefined time interval, the factor being in the multi-digit range, e.g. at least in the two-digit range, the three-digit range or the four-digit range.

In a further embodiment, the system comprises a memory device for storing data, including condensed operation data provided by the data processing module. Due to the possible data reduction, the condensed data may need only little memory space in the memory device.

In a further embodiment, the system may couplable or, respectively, may be coupled to a central monitoring system such that condensed operation data may be communicated to the central monitoring system. The coupling or connection between the system and the central monitoring system may be realized in an appropriate manner, including the application of an appropriate network architecture and related protocols. Due to the possible data reduction, the condensed operation data may be effectively communicated to the central monitoring system, wherein an unacceptable data traffic and network load may be avoided. Moreover, storing the communicated condensed operation data may require only little memory space in the central monitoring system. In comparison to a conventional approach in which raw operation data is transferred, it is also possible to include much more information in the same amount of data transferred.

With regard to a statistical processing method carried out by the data processing module, embodiments as indicated in the following may be considered.

In a further embodiment, the statistical processing method carried out by the data processing module comprises providing, with respect to at least one of the system resources, at least one statistical value for operation data relating to a respective system resource. By means of the least one statistical value, it is e.g. possible to indicate a trend or tendency with respect to the collected operation data. The at least one statistical value may be included in or may be part of the condensed operation data provided by the data processing module. Provision of such information may be referred to a predefined time interval. As indicated above, the time interval may be e.g. an hour.

It is furthermore possible to provide one or a plurality of different statistical values for operation data relating to a respective system resource. In case that a plurality of different system resources is considered, one or a plurality of different statistical values for operation data relating to each of the considered system resources may be provided.

In a similar way, in case that operation data of a plurality of objects is collected by the data collection agent, one or a plurality of different statistical values for operation data relating to a respective system resource or, respectively, for operation data relating to each of the considered system resources, may be provided for each of the plurality of objects.

In a further embodiment, the at least one statistical value is an average value.

In a further embodiment, the at least one statistical value is a quantile. The quantile may be e.g. a quartile, such as Q1, Q2, Q3 or Q4, wherein Q1 is the lower quartile, Q2 is the median, Q3 is the upper quartile and Q4 is the maximum. In this respect, Q1 splits off the lowest 25% of data from the highest 75%, Q2 cuts the data in half, and Q3 splits off the highest 25% of data from the lowest 75%.

Another example for a quantile is P95 or P98. In this regard, P95 splits off the highest 5% of data from the lowest 95%, and P98 splits off the highest 2% of data from the lowest 98%.

In a further embodiment, the at least one statistical value is a percentage of time that operation data of the at least one object relating to a system resource exceeds a predefined threshold of the respective system resource.

Concerning the above-mentioned examples, a plurality of such values (average value, Q1, Q2, Q3 etc.) may be provided together as condensed operation data by the data processing module.

With regard to an analytical processing method carried out by the data processing module, embodiments as indicated in the following may be considered.

In a further embodiment, the system comprises a plurality of objects, and the data collection agent is configured to collect operation data of the plurality of objects. The analytical processing method carried out by the data processing module comprises, with respect to at least one of the system resources, identifying at least one object on the basis of a predefined threshold of a respective system resource. The condensed operation data provided by the data processing module may at least comprise data or information reflecting that the at least one object was identified. Provision of such information may be referred to a predefined time interval. As indicated above, the time interval may be e.g. an hour. In case that a plurality of different system resources is considered, identifying of the at least one object may be carried out on the basis of a plurality of predefined thresholds, each threshold relating to a respective system resource.

In a further embodiment, identifying at least one object may comprise flagging the at least one object. Moreover, condensed operation data provided by the data processing module may only include data with regard to flagged objects.

In a further embodiment, identifying at least one object is carried out for the case that operation data of the at least one object relating to a system resource exceeds a predefined threshold of the respective system resource. If a plurality of different system resources is considered, identifying of the at least one object may in each case be carried out for the case that operation data of the at least one object relating to a respective one of the system resources exceeds a predefined threshold of the respective system resource.

In a further embodiment, the analytical processing method carried out by the data processing module comprises providing the number of times that the at least one object is or, respectively, was identified. Such data may by referred to a predefined time interval (e.g. an hour as indicated above), and may be included in the condensed operation data provided by the data processing module.

Identified objects may be monitored with higher frequency in comparison to objects which are not being identified or objects which are being identified less times. This may be due to the fact that for an object which is identified with a high frequency (an example is an object which is identified every time that operation data is collected by the data collection agent, i.e. for example every second), a higher number of times that the object is identified is provided in comparison to objects which are not being identified or objects which are being identified less times.

In case that a plurality of objects are being identified, such objects may be grouped by the data processing module according to the number of times that the objects are identified. In this way, condensed operation data in the form of or reflecting a top list of objects, the objects being grouped or arranged depending on the number of times that the objects were identified, may be provided by the data processing module.

In a further embodiment, the analytical processing method carried out by the data processing module comprises providing at least one statistical value for operation data of the at least one identified object. It is also possible to provide a plurality of different statistical values for operation data of the at least one identified object. Such data may be referred to a predefined time interval (e.g. an hour as indicated above), and may be included in the condensed operation data provided by the data processing module. Alternatively, it is possible to provide such data only with regard to the time(s) while the at least one object was identified. Possible examples for a statistical value are the ones indicated above, i.e. an average value or a quantile. Moreover, a plurality of such values (average value, Q1, Q2, Q3 etc.) may be provided together as condensed operation data by the data processing module.

In a further embodiment, parameters on the basis of which the data collection and/or the data processing are carried out in the system are configurable. In this way, a flexible adaption of the system, e.g. with regard to different boundary conditions, may be carried out. Such configurable parameters may include e.g. the at least one system resource and/or a threshold of the at least one system resource. Other examples are a time interval on the basis of which operation data is collected by the data collection agent and/or a time interval on the basis of which condensed operation data is provided by the data processing module.

According to a further aspect of the invention, a system network is proposed. The system network comprises a plurality of systems described above or, respectively, a plurality of systems according to one or more of the embodiments described above. Another component of the system network is a central monitoring system. The systems are coupled to the central monitoring system such that condensed operation data of the systems may be communicated to the central monitoring system.

The coupling between the central monitoring system and the plurality of systems may be realized in an appropriate manner, including the application of an appropriate network architecture and related protocols. Since condensed operation data is communicated from the systems to the central monitoring system, an effective communication is made possible without causing an unacceptable data traffic and network load. Storing the communicated condensed operation data may furthermore require only relatively little memory space in the central monitoring system.

In this regard, according to an embodiment, the central monitoring system may comprise a central repository for storing the condensed operation data of the systems. Storing the condensed operation data may be carried out for a predefined time or predefined time series.

In a further embodiment, the central monitoring system furthermore comprises an analysis module. By means of the analysis module, the condensed operation data of the systems may be further processed and/or converted.

According to a further aspect of the invention, a data processing module for a system is proposed in which operation data of at least one object relating to at least one system resource of the system is collected. In this respect, data collection may e.g. be carried out by a data collection agent. The data processing module is configured to process collected operation data such that condensed operation data of the at least one object is provided. The processing performed by the data processing module comprises carrying out at least a statistical processing method and/or an analytical processing method.

With regard to the data processing module, the same advantages may be achieved as already explained above. The condensed operation data may be effectively communicated without causing an unacceptable data traffic. Moreover, based on the condensed operation data, a better performance monitoring is made possible.

It is pointed out that embodiments, features and details described above may correspondingly be applied to the data processing module.

Moreover the following embodiments may be considered by means of which an existing data monitoring framework may be extended to include the functionality of the data processing module.

In one embodiment, the data processing module is a plugin module. The plugin module may be realized in the form of a plugin application for a computer system.

In a further embodiment, the data processing module is an extension module. The extension module may be realized in the form of an extension for an operating system.

According to a further aspect of the invention, a data processing method is proposed. The method comprises collecting operation data of at least one object of a system by means of a data collection agent of the system, the operation data relating to at least one system resource of the system. The method furthermore comprises processing collected operation data by means of a data processing module of the system such that condensed operation data of the at least one object is provided. The processing performed by the data processing module comprises carrying out at least a statistical processing method and/or an analytical processing method.

It is pointed out that embodiments, features and details described above may correspondingly be applied to the data processing method.

In this respect, an embodiment of the method may comprise communicating condensed operation data to another system. The other system may be e.g. a central monitoring system. With regard to this, the system may be coupled to the other system.

The advantageous embodiments and variations of the invention as explained above and/or presented in the dependent claims may be employed individually or else in arbitrary combination with one another - apart from, for example, in cases of unambiguous dependencies or incompatible alternatives.

The above-described properties, features and advantages of this invention and the way in which they are achieved will become clearer and more clearly understood in association with the following description of exemplary embodiments which are explained in greater detail in association with the schematic drawings.

Figure 1 shows a schematic illustration of a system network comprising a plurality of systems and a central monitoring system.

Figures 2 and 3 show examples of tables by means of which condensed operation data relating to objects of a system may be displayed.

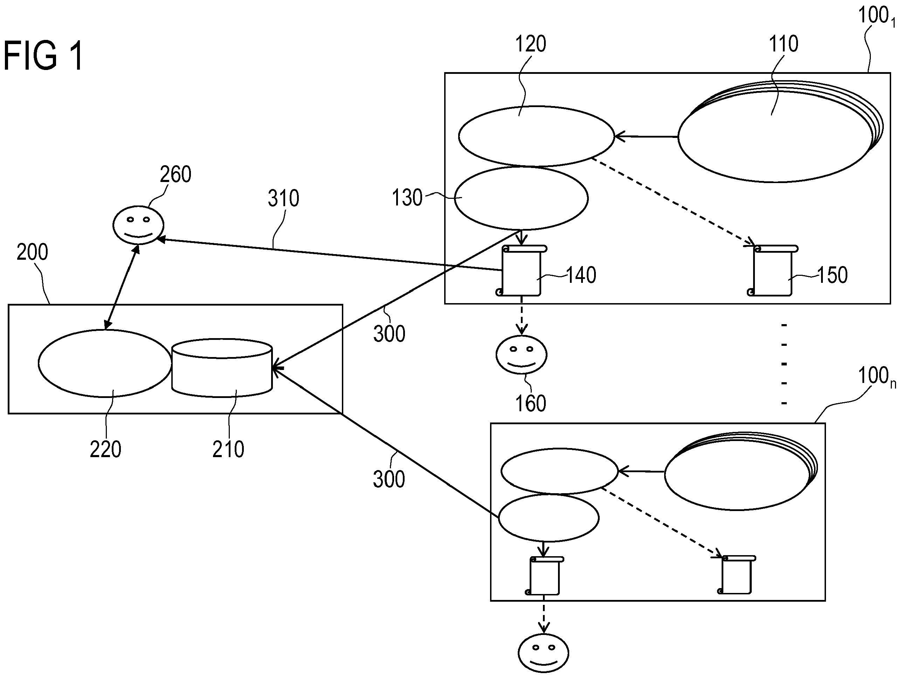

Figure 1 shows a schematic illustration of a system network comprising a plurality of systems 100 and a central monitoring system 200. The systems 100, which may also be referred to as systems 100 of interest, are coupled to the central monitoring system 200 such that data may be communicated and transferred from the systems 100 to the central monitoring system 200. In figure 1, data transfer is indicated by means of the reference sign 300. The central monitoring system 200 is provided in order to monitor and manage the systems 100, thus ensuring a reliable and error-free functionality of the systems 100. In this respect, it is intended to understand the dynamic behavior of objects 110 of the systems 100 in relation to performance and capacity.

The system network illustrated in figure 1 may comprise a number n of systems 100. In this regard, according to figure 1, the systems are additionally labeled with a lowered index such that a first system is labeled with 100₁ and a nth system is labeled with 100ₙ.

The systems 100 and the central monitoring system 200 may in each case be computer systems. As an example, the central monitoring system 200 may be a server or central server, and the systems may be clients or work stations. With regard to this configuration, each of the systems 100, 200 may comprise one or several devices and components such as a CPU, a memory device, an input device, an output device, an I/O device etc. (not depicted).

In the following, the configuration of a system 100 of the system network depicted in figure 1, e.g. of the system 100₁, is described in more detail. This configuration may be present in all the systems 100₁ to 100ₙ of the system network such that the following description may apply to all of the systems 100₁ to 100ₙ.

The system 100 comprises a plurality of operable objects 110. The objects 110 may also be referred to as objects 110 of interest. With regard to an embodiment of the system 100 in the form of a computer system, the objects 110 may be e.g. applications or services running on the computer system.

Another component of the system 100 is a data collection agent 120. The data collection agent 120 is provided and configured to collect raw operation data of the plurality of objects 110, as indicated in figure 1 by means of an arrow, the operation data relating to system resources of the system 100. With regard to this, the data collection agent 120 may have sufficient access and privileges to carry out respective data measurements. The data collection agent 120 may also be an application running on the system 100. A system resource may be any physical or virtual component of limited availability within the system 100. With regard to an embodiment of the system 100 in the form of a computer system, the system resources may be e.g. a CPU usage, a memory usage, a number of I/O connections, a number of internet connections etc.

As shown in figure 1, the system 100 furthermore comprises a data processing module 130. The data processing module 130 is provided and configured to process collected raw operation data of the objects 110 of interest provided by means of the data collection agent 120 in such a way that condensed operation data 140 relating to system resources of the system 100 is provided by the data processing module 130. The processing performed by the data processing module 130 comprises carrying out at least a statistical processing method and/or an analytical processing method.

The data processing module 130 may also be an application running on the system 100 configured in the form of a computer system. As indicated in figure 1, the data processing module 130 may be a separate application and may be directly assigned to the data collection agent 120. In this context, "directly" may mean that the raw data collected by the data collection agent 120 is provided and communicated to the data processing module 130 within the system 100 and not via other external components such as e.g. the central monitoring system 200. In an alternative embodiment, the data processing module 130 may be e.g. an integrated part of the data collection agent 120 (not depicted).

The condensed operation data 140 provided by the data processing module 130 may comprise a high information density and may be significantly smaller or, respectively, may comprise a significantly smaller data amount compared to the raw data collected by the data collection agent 120. This is because the condensed operation data 140 comprises statistical and/or analyzed data provided by the data processing module 130 on the basis of carrying out at least a statistical and/or an analytical processing method. The data reduction achieved in this way may be e.g. a factor 1000 or in the range of a factor 1000. Possible embodiments for statistical and analytical processing methods will be discussed in more detail further below.

The condensed operation data 140 may in each case be provided by the data processing module 130 after expiration of a predefined time interval. The time interval may e.g. be an hour such that condensed operation data 140 is provided by the data processing module 130 every hour. The raw data collection carried out by the data collection agent 120 may in each case also be carried out after expiration of predefined time interval. In contrast to the time interval for providing the condensed operation data 140, the time interval for collecting raw data may be significantly smaller. In this regard, this time interval may be e.g. a second such that raw operation data is collected by the data collection agent 120 every second. These circumstances also contribute to the above-mentioned possible data reduction, i.e. that the condensed operation data 140 provided by the data processing module 130 is significantly smaller than the collected raw operation data.

The system 100 may comprise a local storage or memory device for storing data, including the condensed operation data 140 (not depicted). Due to the possible data reduction, the condensed operation data 140 may need only relatively little memory space in such a memory device.

With regard to the system network illustrated in figure 1, the condensed operation data 140 of each of the systems 100₁ to 100ₙ of interest is furthermore communicated to the central monitoring system 200. The coupling between the central monitoring system 200 and the plurality of systems 100₁ to 100ₙ as well as the associated data transfer 300 may be realized in an appropriate manner, including an appropriate network architecture and the application of appropriate communication protocols. Transferring the condensed operation data 140 may be carried out as soon as the data 140 is provided by means of the data processing modules 130 of the systems 100₁ to 100ₙ, i.e. with regard to the above-mentioned time interval e.g. every hour. The data transfer 300 may comprise polling by the central monitoring system 200 and/or pushing by the systems 100₁ to 100ₙ of interest.

Since condensed operation data 140 is communicated from the systems 100₁ to 100ₙ to the central monitoring system 200, an effective and cost-saving communication may be provided without causing an unacceptable data traffic and network load. Moreover, in comparison to a conventional approach in which raw operation data is transferred to a central monitoring system, the system network illustrated in figure 1 makes it possible to include much more information in the same amount of data transferred.

As shown in figure 1, the central monitoring system 200 comprises a central repository 210 in which the communicated condensed operation data 140 of the systems 100₁ to 100ₙ may be stored. Due to the possible data reduction which is involved with the condensed operation data 140, the transferred condensed operation data 140 may need only relatively little memory space in the central repository 210.

A further component of the central monitoring system 200 is an analysis module 210. The analysis module 210 may be realized in the form of an application running on the central monitoring system 200. By means of the analysis module 210, the condensed operation data 140 of the systems 100₁ to 100ₙ of interest may be further processed and/or converted, e.g. in order to allow for a better understanding.

Figure 1 furthermore indicates that information and data of the analysis module 220 may be provided and displayed to a user 260 of the central monitoring system 200. The display of data, which is indicated in figure 1 by means of the reference sign 310, may be realized in an appropriate manner, e.g. via a console or via a graphical user interface (not depicted). The user 260 may be e.g. a performance engineer or network administrator. As furthermore shown in figure 1, it is also possible that condensed operation data 140 of the systems 100₁ to 100ₙ of interest is directly provided and displayed to the user 260 via the network and a console or a graphical user interface (not depicted).

By means of the displayed information, the user 260 may e.g. effectively and reliably determine bottlenecks, i.e. objects 110 of the systems 100₁ to 100ₙ which may excessively utilize or consume a system resource. Based on this, the user 260 may initiate appropriate measures or countermeasures in order to eliminate any negative effects arising from this. In this regard, the user 260 may e.g. carry out an intensified analysis of a determined object 110 of a system 100, or may initiate stopping and restarting the operation of a determined object 110.

With regard to an intensified analysis, the user 260 may e.g. use raw operation data collected by the data collection agent 120 of a system 100. As shown in Figure 1, such raw operation data 150 may be additionally provided and stored in the systems 100₁ to 100ₙ of interest, i.e. in a respective local storage.

As furthermore indicated in figure 1, condensed operation data 140 may, as the case may be, also be directly provided and displayed to local users 160 of the systems 100₁ to 100ₙ of interest. In a similar way, these users 160 may also determine objects 110 which may excessively utilize or consume a system resource, and may initiate appropriate measures or countermeasures.

In the following, possible embodiments of statistical and analytical processing methods which may be carried out by the data processing module 130 of a system 100 are specified in detail. These embodiments and therefore the following description may apply to all the systems 100₁ to 100ₙ of interest of the system network illustrated in figure 1.

Concerning a statistical processing method, the data processing module 130 may calculate and provide, with respect to at least one of the system resources, at least one statistical value for operation data relating to a respective system resource. This makes it possible to indicate a trend or tendency with respect to the collected operation data. The at least one statistical value may be included in or may be part of the condensed operation data 140 provided by the data processing module 130, and may therefore relate to a predefined time interval. As indicated above, the time interval may be e.g. an hour.

The data processing module 130 may not only provide one, but may also provide a plurality of different statistical values for operation data relating to a respective system resource. It is furthermore possible that the data processing module 130 provides, with regard to a plurality of different system resources, one or a plurality of different statistical values for operation data relating to each of the considered system resources.

As stated above, by means of the data collection agent 120, operation data of a plurality of objects 110 of the associated system 100 of interest may be collected. In this regard, the data processing module 130 may provide one or a plurality of different statistical values for operation data relating to a respective system resource or, respectively, for operation data relating to each of the considered system resources, for each of the plurality of objects 110 of the system 100 of interest.

An example for a statistical value which may be provided by the data processing module 130 is an average value. This value may be provided by performing a mean value or average value calculation of collected operation data.

Another example for a statistical value which may be provided by the data processing module 130 is a quantile. The quantile may be e.g. a quartile such as Q1, Q2, Q3 or Q4, wherein Q1 is the lower quartile, Q2 is the median, Q3 is the upper quartile and Q4 is the maximum.

Q1 which may also be referred to as 25th percentile splits off the lowest 25% of data of a respective data set from the highest 75%. With regard to a respective time interval (of e.g. an hour) in which operation data relating to a respective system resource is periodically collected (e.g. every second), it may be indicated by means of Q1 that 25% of the time the system resource was below the value of Q1 and 75% of the time the system resource was above the value of Q1.

Q2 which may also be referred to as 50th percentile cuts the data of a respective data set in half. With regard to a respective time interval (of e.g. an hour) in which operation data relating to a respective system resource is periodically collected (e.g. every second), it may be indicated by means of Q2 that 50% of the time the system resource was below the value of Q2 and 50% of the time the system resource was above the value of Q2.

Q3 which may also be referred to as 75th percentile splits off the lowest 75% of data of a respective data set from the highest 25%. With regard to a respective time interval (of e.g. an hour) in which operation data relating to a respective system resource is periodically collected (e.g. every second), it may indicated by means of Q3 that 75% of the time the system resource was below the value of Q3 and 25% of the time the system resource was above the value of Q3.

Another example for a quantile which may be provided by the data processing module 130 is P95 or P98, which may also be referred to as 95th percentile or 98th percentile. In this regard, P95 splits off the highest 5% of data of a respective data set from the lowest 95%, and P98 splits off the highest 2% of data of a respective data set from the lowest 98%. With regard to a respective time interval (of e.g. an hour) in which operation data relating to a respective system resource is periodically collected (e.g. every second), it may indicated by means of P95/P98 that 95%/98% of the time the system resource was below the value of P95/P98 and 5%/2% of the time the system resource was above the value of P95/P98.

A further example for a statistical value which may be provided by the data processing module 130 for an object 110 or for a plurality of objects 110 of interest is the percentage of time that collected operation data of an object 110 relating to a system resource exceeds a predefined threshold of the respective system resource. This information may also be provided with regard to a plurality of system resources.

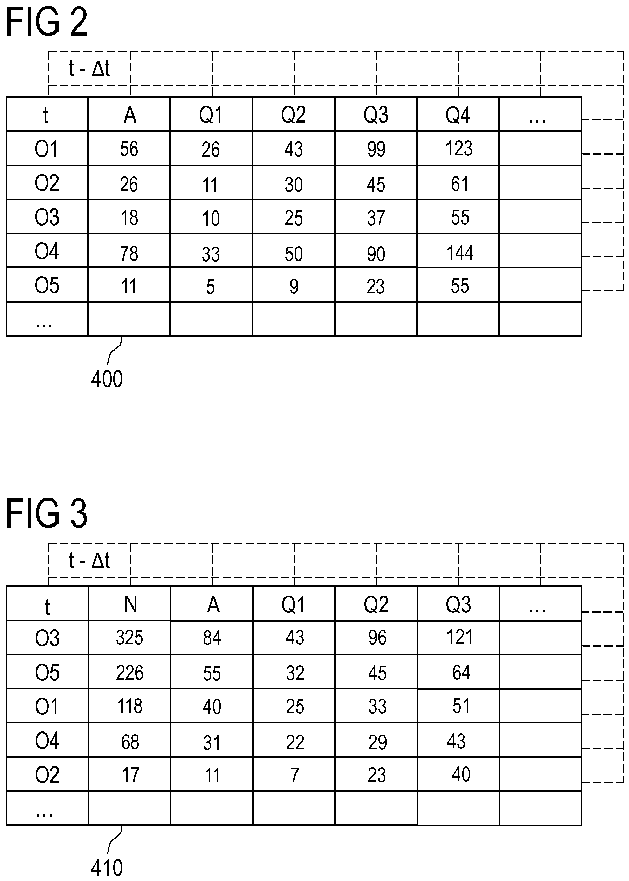

For each of the objects 110 of interest, the data processing module 130 may calculate and provide a plurality of the above-mentioned statistical values (average value, Q1, Q2, Q3 etc.) together as condensed operation data 140. With regard to a user 160, 260, such information may e.g. be displayed in the form of a table. For way of illustration, figure 2 shows an example of a respective table 400 by means of which statistical values such as an average value A and quantiles Q1, Q2, Q3, Q4 etc. relating to a system resource of a number of objects O1, O2, O3, O4, O5 etc. are presented in summarized form. As described above, condensed operation data 140 may be provided in each case after expiration of a predefined time interval. In this regard, for way of illustration, the table 400 depicted in figure 2 refers to and is labeled with a time point t. A previously provided table which is indicated in figure 2 by means of dashed lines refers to an earlier time point t-Δt, wherein Δt is the predefined time interval.

Concerning an analytical processing method carried out by the data processing module 130, embodiments as indicated in the following may be considered.

The data processing module 130 may e.g., with respect to at least one of the system resources, identify and thus flag one or a plurality of objects 110 of interest on the basis of a predefined threshold of a respective system resource. In this regard, identifying and flagging an object 110 may be carried out for the case that operation data of the object 110 relating to a system resource exceeds the associated predefined threshold of the system resource. In case that a plurality of different system resources is considered, identifying and flagging may be carried out on the basis of a plurality of predefined thresholds, each threshold relating to a respective system resource. In this regard, the flagging of one or of a plurality of objects 110 may in each case be carried out for the case that operation data of an object 110 relating to a respective one of the system resources exceeds a predefined threshold of the respective system resource.

Information reflecting that one or a plurality of objects 110 were identified and flagged may be included in or may be part of the condensed operation data 140 provided by the data processing module 130. This information may therefore relate to a predefined time interval (e.g. an hour as indicated above).

Other information which may be provided by the data processing module 130 and which may be included in or may be part of the condensed operation data 140 is the number of times that one or a plurality of objects 110 of interest were identified and flagged within the predefined time interval.

For the case that a plurality of objects 110 are being identified and flagged by the data processing module 130 within the predefined time interval, such objects 110 may be additionally grouped according to the number of times that the objects 110 were flagged. In this way, information in the form of or reflecting a top list of objects 110, the objects 110 being grouped or arranged depending on the number of times that the objects 110 were flagged, may be provided by the data processing module 130. Such information may also be included in or may be part of the condensed operation data 140.

The data processing module 130 may be furthermore configured to provide at least one statistical value for operation data of an identified and flagged object 110. For the case that a plurality of objects 110 are being flagged, at least one statistical value for operation data of each of the flagged objects 110 may be provided by the data processing module 130.

It is also possible that the data processing module 130 provides a plurality of different statistical values for operation data of the flagged object(s) 110. Such information may be included in or may be part of the condensed operation data 140 provided by the data processing module 130, and may relate to a predefined time interval (e.g. an hour as indicated above). Alternatively, it is possible to provide such data only with regard to the time(s) while the respective object(s) 110 was/were flagged. Possible examples for a statistical value are the ones indicated above, i.e. an average value or a quantile. Moreover, a plurality of such values (average value, Q1, Q2, Q3 etc.) may be provided together as condensed operation data 140 by the data processing module 130.

Providing at least one statistical value for operation data of one or of a plurality of flagged objects 110 may be carried out in such a way that objects 110 may be monitored with higher frequency in contrast to other objects 110 which are not being flagged or objects 110 which are being flagged less times. This may be realized in the above-mentioned manner, in which statistical values for operation data is only provided with regard to the time(s) while respective object(s) 110 were flagged.

Concerning a user 160, 260, information about identified and flagged objects 110 may be displayed e.g. in the form of a table. For way of illustration, figure 3 shows an example of a respective table 410 indicating in summarized form a number N of times that an object 110 was flagged and associated statistical values such as an average value A and quantiles Q1, Q2, Q3, Q4 etc. relating to a system resource for a number of objects O1, O2, O3, O4, O5 etc. The objects 110 and the respective statistical data are furthermore arranged according to the number of times that the objects 110 were flagged. As described above, condensed operation data 140 may be provided in each case after expiration of a predefined time interval. In this regard, similar to figure 2, the table 410 depicted in figure 3 refers to and is labeled with a time point t, whereas a previously provided table refers to an earlier time point t-Δt.

It is pointed out that above-mentioned parameters on the basis of which the data collection and/or the data processing are carried out in a system 100 may be configurable. In this way, a flexible adaption of the system 100, e.g. with regard to different or even changing boundary conditions, may be carried out. Configuring parameters may also be dependent on an operating system of a systems 100. Examples for parameters which may be configured are one or a plurality of system resources and/or a threshold of one or a plurality of system resources. Other examples are a time interval on the basis of which operation data is collected by the data collection agent 120 and/or a time interval on the basis of which condensed operation data 140 is provided by a data processing module 130 of a system 100.

With regard to a system 100 comprising a data processing module 130 as described above, it is possible to establish and configure such a system 100 in such a way that the system 100 comprises the data processing module 130 right from the beginning.

Alternatively, an existing system 100 which does not comprise a data processing module 130 may later be equipped with such a data processing module 130. In this regard, the data processing module 130 may be e.g. a plugin module configured to be later integrated into a respective system 100. In this regard, the plugin module may be realized in the form of a plugin application for a computer system.

A further embodiment which may be considered for a data processing module 130 configured to be later integrated into an existing system 100 is an extension module. The extension module may be realized in the form of an extension for an operating system running on a respective system 100.

The embodiments explained above with reference to the figures constitute preferred or exemplary embodiments of the invention. Besides the embodiments described and depicted, further embodiments are conceivable which may comprise further modifications and/or combinations of features.

In this regard, it is pointed out that above-mentioned specifications of numerical data relating e.g. to time intervals are to be considered as examples which may be replaced by other numerical data. In this respect, instead of an hour, providing condensed operation by means of a data processing module may in each case be carried out after expiration of a larger time interval of e.g. a plurality of hours, one day or a plurality of days.

Moreover, a system as described above may not only comprise objects in the form of applications or services running on the system. In this regard, at least one object of a system of which operation data is collected may be a physical device. Examples are an actuator, a thermostat, a memory device etc.

Although the invention has been more specifically illustrated and described in detail by means of preferred exemplary embodiments, nevertheless the invention is not restricted by the examples disclosed and other variations may be derived therefrom by the person skilled in the art, without departing from the scope of protection of the invention.

### Reference list

- 100: system
- 110: object
- 120: data collection agent
- 130: data processing module
- 140: condensed operation data
- 150: raw operation data
- 160: user
- 200: central monitoring system
- 210: central repository
- 220: analysis module
- 260: user
- 300: data transfer
- 310: display of data
- 400: table
- 410: table

## Claims

1. A system (100) comprising:
at least one object (110);
a data collection agent (120) configured to collect operation data of the at least one object (110), the operation data relating to at least one system resource of the system (100); and
a data processing module (130) configured to process collected operation data such that condensed operation data (140) of the at least one object is provided,
wherein the processing performed by the data processing module (130) comprises carrying out at least one of the following:
a statistical processing method; and/or
an analytical processing method.

2. The system according to claim 1,
wherein the system (100) is a computer system, and wherein the at least one object (110) is a service or application running on the computer system.

3. The system according to any one of the preceding claims, wherein the data collection agent (120) is configured to provide collected operation data in each case after expiration of a first predefined time interval,
wherein the data processing module (130) is configured to provide condensed operation data (140) in each case after expiration of a second predefined time interval, and wherein the second predefined time interval exceeds the first predefined time interval.

4. The system according to any one of the preceding claims, wherein the system (100) is couplable to a central monitoring system (200) such that condensed operation data may be communicated (300) to the central monitoring system (200).

5. The system according to any one of the preceding claims, wherein the statistical processing method carried out by the data processing module comprises providing, with respect to at least one of the system resources, at least one statistical value for operation data relating to a respective system resource.

6. The system according to claim 5,
wherein the at least one statistical value is one of the following:
an average value; or
a quantile.

7. The system according to any of claims 5 and 6,
wherein the at least one statistical value is a percentage of time that operation data of the at least one object (110) relating to a system resource exceeds a predefined threshold of the respective system resource.

8. The system according to any of the preceding claims,
wherein the system comprises a plurality of objects (110), wherein the data collection agent (120) is configured to collect operation data of the plurality of objects (110), and wherein the analytical processing method carried out by the data processing module (130) comprises, with respect to at least one of the system resources, identifying at least one object (110) on the basis of a predefined threshold of a respective system resource.

9. The system according to claim 8,
wherein identifying at least one object (110) is carried out for the case that operation data of the at least one object (110) relating to a system resource exceeds a predefined threshold of the respective system resource.

10. The system according to any one of claims 8 and 9,
wherein the analytical processing method carried out by the data processing module (130) comprises providing the number of times that the at least one object is (110) identified.

11. The system according to claim 10,
wherein the analytical processing method carried out by the data processing module (130) comprises grouping objects (110) according to the number of times that the objects (110) are identified.

12. The system according to any one of claims 8 to 11,
wherein the analytical processing method carried out by the data processing module comprises providing at least one statistical value for operation data of the at least one identified object (110).

13. A system network comprising a plurality of systems (100) according to any one of the preceding claims and a central monitoring system (200),
wherein the systems (100) are coupled to the central monitoring system (200) such that condensed operation data of the systems may be communicated (300) to the central monitoring system (200).

14. A data processing module (130) for a system (100) in which operation data of at least one object (110) relating to at least one system resource of the system (110) is collected,
wherein the data processing module (130) is configured to process collected operation data such that condensed operation data (140) of the at least one object (110) is provided,
wherein the processing performed by the data processing module (130) comprises carrying out at least one of the following:
a statistical processing method; and/or
an analytical processing method.

15. A data processing method comprising:
collecting operation data of at least one object (110) of a system (100) by means of a data collection agent (120) of the system (100), the operation data relating to at least one system resource of the system (100); and
processing collected operation data by means of a data processing module (130) of the system (100) such that condensed operation data (140) of the at least one object (110) is provided,
wherein the processing performed by the data processing module (130) comprises carrying out at least one of the following:
a statistical processing method; and/or
an analytical processing method.
